# EUROPEAN PATENT APPLICATION

(11) **EP 1 769 845 A1**
(43) Date of publication of application: **04.04.2007**
(21) Application number: 05751543.9
(22) Date of filing: 15.06.2005
(51) Int. Cl.: B01J 20/22, A23L 3/3436, B32B 27/18, B65D 81/26, C08K 5/098, C08L 29/04

(54) **OXYGEN-ABSORBING COMPOSITION AND PACKAGING MATERIAL**

(30) Priority: 18.06.2004 JP 2004181176
(71) Applicant: Kuraray Co., Ltd., Okayama 710-8622 (JP)
(72) Inventor: TSUJI, Y., KURARAY CO., LTD., Okayama 7108691 (JP); KODANI, Mie c/o KURARAY CO., LTD., Okayama 7108622 (JP); YAMANAKA, Masayoshi c/o KURARAY CO., LTD., Okayama 7108691 (JP); WATANABE, Tomoyuki c/o KURARAY CO., LTD., Okayama 7108622 (JP); IWASAKI, Hideharu c/o KURARAY CO., LTD., Okayama 7108691 (JP)
(74) Representative: Hart Davis, Jason
(86) International application number: PCT/JP2005/010923
(87) International publication number: WO 2005/123248

(57) **Abstract**

An oxygen-absorbing composition of the present invention contains a gas-barrier resin as well as a salt of an unsaturated carboxylic acid and an oxygen absorption promoter that are dispersed in the gas-barrier resin. A cation that composes the salt of the unsaturated carboxylic acid is a cation of at least one element selected from the group consisting of alkali metals, alkaline earth metals, and aluminum. The oxygen absorption promoter is at least one selected from the group consisting of transition metal salts, radical generators, and photocatalyst particles. The unsaturated carboxylic acid has a molecular weight of 3000 or less.

## Description

### Technical Field

The present invention relates to oxygen-absorbing compositions and packaging materials.

### Background Art

In order to stably store goods that can be deteriorated considerably by oxygen, such as foodstuffs, it is important to store them in an environment containing less oxygen. Conventionally, various oxygen absorbents have been proposed to enable such storage. For instance, an oxygen absorbent has been proposed that is sealed in a package (for example, JP63(1988)-198962A). Such an oxygen absorbent is used in the form of powder, tablet, sheet, etc. However, when goods that are deteriorated considerably by oxygen are to be stored, it may be desirable that the packaging material itself has an oxygen-absorbing ability. In order to meet such a demand, a composition having an oxygen-absorbing ability has been proposed (for instance, JP5(1993)-115776A), for example. The composition of JP5(1993)-115776A includes ethylenically unsaturated hydrocarbon that is a compound to be subjected to oxidization (hereinafter may be referred to as a "compound to be oxidized"), and a transition metal catalyst. A carbon-carbon double bond reacts with oxygen and absorbs oxygen in the presence of a transition metal catalyst.

However, conventional compositions having an oxygen-absorbing ability may fail to provide sufficiently high characteristics. For example, in the case of a composition including a compound to be oxidized that has been dispersed in resin, when a packaging material is produced using it, there are problems that a component derived from the compound to be oxidized elutes from the resin and it is accompanied by the generation of malodor.

### Disclosure of Invention

Hence, one of the objects of the present invention is to provide an oxygen-absorbing composition in which a compound to be oxidized tends not to elute from resin and characteristics such as an oxy gen-absorbing ability are high, and a packaging material produced using the same.

In order to achieve the above-mentioned object, an oxygen-absorbing composition of the present invention contains a gas-barrier resin as well as a salt of an unsaturated carboxylic acid and an oxygen absorption promoter that are dispersed in the gas-barrier resin. A cation that composes the salt of the unsaturated carboxylic acid is a cation of at least one element selected from the group consisting of alkali metals, alkaline earth metals, and aluminum. The oxygen absorption promoter is at least one selected from the group consisting of transition metal salts, radical generators, and photocatalyst particles. The unsaturated carboxylic acid has a molecular weight of 3000 or less.

In the above-mentioned composition of the present invention, the unsaturated carboxylic acid may be at least one selected from the group consisting of palmitoleic acid, oleic acid, linoleic acid, linolenic acid, arachidonic acid, parinaric acid, dimer acid, docosahexaenoic acid, eicosapentaenoic acid, fish oil fatty acid, linseed oil fatty acid, soybean oil fatty acid, tung oil fatty acid, sugar oil fatty acid, sesame oil fatty acid, cottonseed oil fatty acid, rapeseed oil fatty acid, and tall oil fatty acid.

In the above-mentioned composition of the present invention, the gas-barrier resin may contain a polyvinyl alcohol resin.

A packaging material of the present invention includes a part made of an oxygen-absorbing composition. The oxygen-absorbing composition contains a gas-barrier resin as well as a salt of an unsaturated carboxylic acid and an oxygen absorption promoter that are dispersed in the gas-barrier resin. A cation that composes the salt of the unsaturated carboxylic acid is a cation of at least one element selected from the group consisting of alkali metals, alkaline earth metals, and aluminum. The oxygen absorption promoter is at least one selected from the group consisting of transition metal salts, radical generators, and photocatalyst particles. The unsaturated carboxylic acid has a molecular weight of 3000 or less. This packaging material includes a portion made of the above-mentioned oxygen-absorbing composition of the present invention.

In the packaging material of the present invention, the above-mentioned part may be a layer made of the oxy gen-absorbing composition.

The packaging material of the present invention may include the layer described above and another layer stacked on the layer described above.

For the oxygen-absorbing composition of the present invention, a particular unsaturated carboxylate is used as a compound to be oxidized. The unsaturated carboxylate that is used in the present invention has lower solubility in organic solvents and water as well as a lower vapor pressure. Accordingly, the unsaturated carboxylate tends not to bleed-out from the resin and thereby can form a stable packaging material for a long period of time. Furthermore, the use of this unsaturated carboxylate makes it possible to form an oxygen-absorbing layer with less coloring.

The packaging material of the present invention can be used for goods that are affected considerably by deterioration caused by oxygen, such as, for instance, foodstuffs, medicines, medical equipment, machine parts, garments, etc. Particularly, the packaging material of the present invention is suitable as a packaging material to be used under a high temperature and high humidity condition.

### Brief Description of Drawings

FIG. 1 is a graph showing an example of the characteristics of oxygen-absorbing compositions according to the present invention that contain a linolenic acid salt used therein.
FIG. 2 is a graph showing another example of the characteristics of oxygen-absorbing compositions according to the present invention that contain a linolenic acid salt used therein.
FIG. 3 is a graph showing still another example of the characteristics of oxygen-absorbing compositions according to the present invention that contain a linolenic acid salt used therein.
FIG. 4 is a graph showing yet another example of the characteristics of oxygen-absorbing compositions according to the present invention that contain a linolenic acid salt used therein.
FIG. 5 is a graph showing an example of the characteristics of oxygen-absorbing compositions according to the present invention that contain an eicosapentaenoic acid salt used therein.
FIG. 6 is a graph showing another example of the characteristics of oxygen-absorbing compositions according to the present invention that contain an eicosapentaenoic acid salt used therein.
FIG. 7 is a graph showing still another example of the characteristics of oxy gen-absorbing compositions according to the present invention that contain an eicosapentaenoic acid salt used therein.
FIG. 8 is a graph showing yet another example of the characteristics of oxygen-absorbing compositions according to the present invention that contain an eicosapentaenoic acid salt used therein.
FIG. 9 is a graph showing another example of the characteristics of oxygen-absorbing compositions according to the present invention that contain sodium docosahexaenoate used therein.
FIG. 10 is a graph showing an example of the characteristics of an oxygen-absorbing composition according to the present invention that contains an eleostearic acid salt used therein and an oxygen-absorbing composition according to a comparative example that contains eleostearic acid used therein.
FIG. 11 is a graph showing another example of the characteristics of an oxygen-absorbing composition according to the present invention that contains an eleostearic acid salt used therein and an oxygen-absorbing composition according to a comparative example that contains eleostearic acid used therein.
FIG. 12 is a graph showing still another example of the characteristics of an oxygen-absorbing composition according to the present invention that contains an eleostearic acid salt used therein and an oxygen-absorbing composition according to a comparative example that contains eleostearic acid used therein.
FIG. 13 is a graph showing yet another example of the characteristics of an oxygen-absorbing composition according to the present invention that contains an eleostearic acid salt used therein and an oxygen-absorbing composition according to a comparative example that contains eleostearic acid used therein.

### Description of the Preferred Embodiments

Hereinafter, embodiments of the present invention are described. The following description may include specific compounds that are indicated as examples of the materials that exhibit specific functions. However, the present invention is not limited to them. Furthermore, the materials that are indicated as examples may be used individually or may be used in combination unless otherwise specified.

### Embodiment 1

In Embodiment 1, an oxy gen-absorbing composition of the present invention is described. The oxygen-absorbing composition of Embodiment 1 contains a gas-barrier resin as well as a salt of an unsaturated carboxylic acid (hereinafter may be referred to as "carboxylate (A)" in some cases) and an oxygen absorption promoter that are dispersed in the gas-barrier resin. The cation that composes the carboxylate (A) is a cation of at least one element selected from the group consisting of alkali metals, alkaline earth metals, and aluminum. The oxygen absorption promoter is at least one selected from the group consisting of transition metal salts, radical generators, and photocatalyst particles. The unsaturated carboxylic acid has a molecular weight of 3000 or less.

The carboxylate (A) is described below. Examples of the alkali metal that composes the carboxylate (A) include sodium and potassium. Examples of the alkaline earth metal that composes the carboxylate (A) include magnesium, calcium, barium, and strontium. The carboxylate (A) that contains an alkaline earth metal used therein has lower water solubility than that of the carboxylate (A) that contains an alkali metal used therein and therefore can be prevented from eluting into water. Particularly, calcium is preferable since it is harmless in safety and health.

The carboxylate (A) that contains aluminum used therein has lower solubility in water and a lower vapor pressure than those of the carboxylate (A) that contains calcium used therein. Accordingly, the carboxylate (A) that contains aluminum used therein further can be prevented from eluting into water and bleeding-out from the resin. Moreover, the use of a neutral metal such as aluminum can prevent the carboxylate (A) from being decomposed with decarboxylation. This allows a stable packaging material to be formed for a long period of time.

In the present invention, it is preferable that the carboxylic acid that composes the carboxylate (A) have a lower molecular weight. The molecular weight of the carboxylic acid that composes the carboxylate (A) is 3000 or less, preferably 500 or less, and for example, 100 to 400. The carboxylate (A) that is derived from carboxylic acid whose molecular weight is 3000 or less can be dispersed easily in resin. The formula weight of the carboxylate (A) that is formed of divalent cations is about double the molecular weight of the carboxylic acid. The formula weight of the carboxylate (A) that is formed of trivalent cations is about triple the molecular weight of the carboxylic acid.

The carboxylate (A) has a carbon-carbon double bond. The carboxylate (A) may be a salt of a monocarboxylic acid or a salt of a polycarboxylic acid such as dicarboxylic acid. The carboxylate (A) may be a linear chain or chain acyclic compound or a cyclic compound having an unsaturated alicyclic structure. When an unsaturated carboxylic acid having a side chain is used, oxygen absorption is accompanied by decomposition of the side chain portion and thereby a low-molecular substance (odorous substance) may be generated. In order to prevent the low-molecular substance that accompanies oxygen absorption from being generated, it is preferable that a linear-chain unsaturated carboxylate or an unsaturated carboxylate having an alicyclic structure be used. The unsaturated carboxylic acid that composes the carboxylate (A) can be at least one selected from the group consisting of palmitoleic acid, oleic acid, linoleic acid, linolenic acid, arachidonic acid, parinaric acid, dimer acid, docosahexaenoic acid, eicosapentaenoic acid, fish oil fatty acid, linseed oil fatty acid, soybean oil fatty acid, tung oil fatty acid (mainly eleostearic acid), sugar oil fatty acid, sesame oil fatty acid, cottonseed oil fatty acid, rapeseed oil fatty acid, and tall oil fatty acid. Particularly, the use of linolenic acid, docosahexaenoic acid, or eicosapentaenoic acid that has a number of double bonds in molecules thereof makes it possible to obtain compositions with a high oxygen-absorbing ability.

In the carboxylate (A), the ratio of the number *Nd* of carbon-carbon double bonds to the total carbon number *Nc,* i.e. the value of *Nd*/*Nc* is generally in the range of 0.005 to 0.5, for example, in the range of 0.05 to 0.3. When the value of *Nd*/*Nc* is in the range of 0.15 or higher, compositions with a higher oxygen-absorbing ability can be obtained.

Examples of the carboxylate (A) include, as an alkali metal salt, sodium palmitoleate, sodium oleate, sodium linoleate, sodium linolenate, sodium arachidonate, sodium parinarate, sodium dimerate, sodium docosahexaenoate, sodium eicosapentaenoate, fish oil fatty acid sodium salt, linseed oil fatty acid sodium salt, soybean oil fatty acid sodium salt, sodium eleostearate, potassium palmitoleate, potassium oleate, potassium linoleate, potassium linolenate, potassium arachidonate, potassium parinarate, potassium dimerate, potassium docosahexaenoate, potassium eicosapentaenoate, fish oil fatty acid potassium salt, linseed oil fatty acid potassium salt, soybean oil fatty acid potassium salt, potassium eleostearate, etc.

Examples of the carboxylate (A) containing an alkaline earth metal include calcium palmitoleate, calcium oleate, calcium linoleate, calcium linolenate, calcium arachidonate, calcium parinarate, calcium dimerate, calcium docosahexaenoate, calcium eicosapentaenoate, fish oil fatty acid calcium salt, linseed oil fatty acid calcium salt, soybean oil fatty acid calcium salt, calcium eleostearate, magnesium palmitoleate, magnesium oleate, magnesium linoleate, magnesium linolenate, magnesium arachidonate, magnesium parinarate, magnesium dimerate, magnesium docosahexaenoate, magnesium eicosapentaenoate, fish oil fatty acid magnesium salt, linseed oil fatty acid magnesium salt, soybean oil fatty acid magnesium salt, magnesium eleostearate, barium palmitoleate, barium oleate, barium linoleate, barium linolenate, barium arachidonate, barium parinarate, barium dimerate, barium docosahexaenoate, barium eicosapentaenoate, fish oil fatty acid barium salt, linseed oil fatty acid barium salt, soybean oil fatty acid barium salt, barium eleostearate, etc.

Examples of the carboxylate (A) containing aluminum include aluminum palmitoleate, aluminum oleate, aluminum linoleate, aluminum linolenate, aluminum arachidonate, aluminum parinarate, aluminum dimerate, aluminum docosahexaenoate, aluminum eicosapentaenoate, fish oil fatty acid aluminum salt, linseed oil fatty acid aluminum salt, soybean oil fatty acid aluminum salt, aluminum eleostearate, etc.

Among them, calcium linolenate, calcium docosahexaenoate, calcium eicosapentaenoate, and fish oil fatty acid calcium salt are preferable in view of the fact that they have an excellent oxygen-absorbing ability, they can prevent the carboxylate (A) from eluting into water, and they are harmless in safety and health. Moreover, aluminum linolenate, aluminum docosahexaenoate, aluminum eicosapentaenoate, and fish oil fatty acid aluminum salt are further preferable in view of the additional fact that they can prevent the carboxylate (A) from being decomposed with decarboxylation, and can form a stable packaging material for a long period of time.

Preferably, the carboxylate (A) is dispersed in the composition with a high dispersibility. Various types of molded articles made of compositions that are in such a condition are preferable in that the oxygen-absorbing property and gas-barrier property thereof can be maintained easily and a function that the gas-barrier resin has can be provided for them. In addition, they also have good transparency. In this case, it is preferable that the carboxylate (A) particles that have been dispersed have an average particle diameter of 10 µm or smaller. When the average particle diameter exceeds 10 µm, the interface between the carboxylate (A) and the resin that surrounds the carboxylate (A) has a smaller area. This may result in a deteriorated oxygen gas-barrier property and a reduced oxygen-absorbing ability. From the viewpoints of the oxygen-absorbing property, gas-barrier property, and transparency of molded articles such as a multilayer container produced using the composition, the carboxylate (A) particles that have been dispersed have more preferably an average particle diameter of 5 µm or smaller, further preferably 2 µm or smaller. The "average particle diameter" denotes one that is calculated by taking a photograph of a section of the composition at 3000-fold magnification using a scanning electron microscope and averaging the particle diameters of all the particles present in the view.

The oxygen absorption promoter is a substance for promoting oxidization of the carboxylate (A) having a carbon-carbon double bond. The oxidization of the carboxylate (A) allows oxygen contained in the atmosphere to be consumed. When a transition metal salt is used as the oxygen absorption promoter, a particularly high oxygen-absorbing ability can be obtained.

Examples of the transition metal that composes the transition metal salt include iron, nickel, copper, manganese, cobalt, rhodium, titanium, chromium, vanadium, and ruthenium. Among them, iron, nickel, copper, manganese, and cobalt are preferred. Anions that compose the transition metal salt can be those derived from organic acids or chlorides, for example. Examples of organic acids include acetic acid, stearic acid, dimethyldithiocarbamic acid, palmitic acid, 2-ethylhexanoic acid, neodecanoic acid, linoleic acid, tallic acid, oleic acid, resin acid, capric acid, and naphthenic acid. Since the transition metal salt is added for the purpose of using it as an oxygen absorption promoter, the organic acid that composes it may have a carbon-carbon double bond or may have no carbon-carbon double bond. Typical transition metal salts include, for example, cobalt 2-ethylhexanoate, cobalt neodecanoate, cobalt naphthenate, and cobalt stearate. The transition metal salt to be used herein also can be an ionomer.

Examples of the radical generator include N-hydroxysuccinimide, N-hydroxymaleimide, N,N'-dihydroxycyclohexanetetracarboxylic acid diimide, N-hydroxyphthalimide, N-hydroxytetrachlorophthalimide, N-hydroxytetrabromophthalimide, N-hydroxyhexahydrophthalimide, 3-sulfonyl-N-hydroxyphthalimide, 3-methoxycarbonyl-N-hydroxyphthalimide, 3-methyl-N-hydroxyphthalimide, 3-hydroxy-N-hydroxyphthalimide, 4-nitro-N-hydroxyphthalimide, 4-chloro-N-hydroxyphthalimide, 4-methoxy-N-hydroxyphthalimide, 4-dimethylamino-N-hydroxyphthalimide, 4-carboxy-N-hydroxyhexahydrophthalimide, 4-methyl-N-hydroxyhexahydrophthalimide, N-hydroxy HET acid imide, N-hydroxyhimic acid imide, N-hydroxytrimellitimide, N,N-dihydroxypyromellitic acid diimide, etc. Among them, N-hydroxysuccinimide, N-hydroxymaleimide, N-hydroxyhexahydrophthalimide, N,N'-dihydroxycyclohexanetetracarboxylic acid diimide, N-hydroxyphthalimide, N-hydroxytetrabromophthalimide, and N-hydroxytetrachlorophthalimide are particularly preferable.

The photocatalyst particle is one that serves as a catalyst for an oxidation reaction of the carboxylate (A) under light irradiation. Examples of the photocatalyst particle include particles of titanium dioxide, tungsten oxide, zinc oxide, cerium oxide, strontium titanate, and potassium niobate. Generally, these are used in the form of powder. Among them, titanium dioxide is preferable since it has a high photocatalytic function, has been approved as a food additive, and is safe as well as inexpensive. Preferably, titanium dioxide is of an anatase type and at least 30 wt% (more preferably at least 50 wt%) of the titanium dioxide powder is anatase-type titanium dioxide. The use of anatase-type titanium dioxide allows high photocatalysis to be obtained.

The gas-barrier resin is selected according to the intended use of the composition. Examples of the gas-barrier resin include synthetic resins such as polyvinyl alcohol resin, polyamide resin, polyacrylonitrile resin, etc. One of them may be used individually or at least one of them may be mixed together. Those resins have high oxygen-barrier properties. Accordingly, the use of those resins makes it possible to obtain compositions that are suitable for packaging materials for goods that may have a problem of deterioration caused by oxygen. Among those resins, polyvinyl alcohol resin is preferable since it allows the carboxylate (A) to have a good dispersibility. Preferably, the oxygen transmission rate of the gas-barrier resin is 500 ml·20 µm /(m²·day·atm) (20°C, 65%RH) or lower (this denotes that the volume of oxygen that is transmitted per day through a film having an area of 1 m² and a thickness of 20 µm under a differential pressure of oxygen of 1 atm is 500 ml or less when it is measured under the environment having a temperature of 20°C and a relative humidity of 65%), for example, 20 ml·20 µm/(m²·day·atm) or less.

The oxygen-absorbing composition of the present invention may contain a resin other than those described above. For example, such a resin can be polyolefin such as polyethylene, polypropylene, poly(4-methyl-1-pentene), or poly(1-butene). Furthermore, an ethylene-propylene copolymer, polyvinylidene chloride, polyvinyl chloride, polystyrene, polycarbonate, or polyacrylate may be used. Polyester such as polyethylene terephthalate, polybutylene terephthalate, polyethylene naphthalate, etc. also may be used. Moreover, a copolymer of ethylene or propylene and another monomer may be used. Examples of another monomer include: alpha-olefins such as 1-butene, isobutene, 4-methyl-1-pentene, 1-hexene, 1-octene, etc.; unsaturated carboxylic acids such as itaconic acid, methacrylic acid, acrylic acid, maleic anhydride, etc. as well as their salts, their partial or complete esters, their nitriles, their amides, and their anhydrides; carboxylic acid vinyl esters such as vinyl formate, vinyl acetate, vinyl propionate, vinyl butylate, vinyl octanoate, vinyl dodecanoate, vinyl stearate, vinyl arachidonate, etc.; vinylsilane compounds such as vinyltrimethoxysilane, etc.; unsaturated sulfonic acids and their salts; alkylthiols; and vinyl pyrrolidones.

The polyvinyl alcohol resin can be obtained by saponifying a homopolymer of vinylesters or a copolymer of vinylester and another monomer (particularly, a copolymer of vinylester and ethylene) using, for instance, an alkali catalyst. An example of vinylester is vinyl acetate, but other fatty acid vinylesters (such as vinyl propionate, vinyl pivalate, etc.) also can be used.

The degree of saponification of the vinyl ester component of the polyvinyl alcohol resin is preferably at least 90 mol%, for example, at least 95 mol%. A degree of saponification of at least 90 mol% can prevent the gas barrier property from deteriorating under high humidity. Two or more polyvinyl alcohol resins may be used that are different in degree of saponification from each other. The degree of saponification of the polyvinyl alcohol resin can be determined by the nuclear magnetic resonance (NMR) method.

A preferable melt flow rate (at 210°C under a load of 2160 g, according to Japanese Industrial Standard (JIS) K7210) of polyvinyl alcohol resin is 0.1 to 100 g/10 min, more preferably 0.5 to 50 g/10 min, and further preferably 1 to 30 g/10 min. When the melt flow rate departs from the range of 0.1 to 100 g/10 min, processability often deteriorates during melt molding.

When using a polyvinyl alcohol resin such as an ethylene-vinyl alcohol copolymer (EVOH), it is preferable that an aluminum salt be used for the carboxylate (A). The use of such a carboxylate (A) makes it possible to reduce the coloring of the composition of the present invention.

Among polyvinyl alcohol resins, the ethylene-vinyl alcohol copolymer (EVOH) is characterized by allowing the melt molding to be carried out and having a good gas barrier property under high humidity. The ratio of ethylene units to the total structural units of EVOH is, for example, in the range of 5 to 60 mol% (preferably 10 to 55 mol%). When the ratio of ethylene units is at least 5 mol%, the gas barrier property can be prevented from deteriorating under high humidity. Furthermore, when the ratio of ethylene units is 60 mol% or lower, a high gas barrier property can be obtained. The ratio of ethylene units can be determined by the nuclear magnetic resonance (NMR) method. A mixture of two or more of EVOHs that are different in the ratio of ethylene units from each other may be used.

The EVOH can contain a small amount of another monomer as a copolymer component as long as the effects of the present invention can be obtained. Examples of such a monomer include: alpha-olefins such as propylene, 1-butene, isobutene, 4-methyl-1-pentene, 1-hexene, 1-octene, etc.; unsaturated carboxylic acids such as itaconic acid, methacrylic acid, acrylic acid, and maleic anhydride, as well as their derivatives; vinylsilane compounds such as vinyltrimethoxysilane, vinyltriethoxysilane, vinyltri(beta-methoxy-ethoxy)silane, gamma-methacryloxypropyltrimethoxysilane, etc.; unsaturated sulfonic acids and their salts; alkylthiols; and vinylpyrrolidones. In the case where 0.0002 to 0.2 mol% of vinylsilane compound is contained in the EVOH as a copolymer component, when molding is carried out by co-extrusion molding or co-injection molding, a homogeneous molded article can be produced easily. For the vinylsilane compound, vinyltrimethoxysilane or vinyltriethoxysilane can be used suitably.

A boron compound can be added to the EVOH. This facilitates the production of a homogeneous molded article when molding is carried out by the co-extrusion molding or co-injection molding. Examples of the boron compound include boric acids (for instance, orthoboric acid), boric acid esters, boric acid salts, and boron hydrides. Furthermore, an alkali metal salt (for instance, sodium acetate, potassium acetate, or sodium phosphate) may be added to the EVOH. This may improve interlayer adhesion or compatibility in some cases. A phosphate compound (for example, sodium dihydrogenphosphate, potassium dihydrogenphosphate, disodium hydrogenphosphate, or dipotassium hydrogenphosphate) may be added to the EVOH. This may improve thermal stability of the EVOH in some cases. EVOHs containing an additive such as a boron compound, an alkali metal salt, or a phosphorus compound that has been added thereto can be produced by a well-known method.

The type of the polyamide resin is not particularly limited. Examples thereof include homopolymers of aliphatic polyamides such as polycaproamide (Nylon-6), polyundecanamide (Nylon-11), polylauryllactam (Nylon-12), polyhexamethylene adipamide (Nylon 6,6), polyhexamethylene sebacamide (Nylon-6,10), etc.; copolymers of aliphatic polyamides such as a caprolactam / laurolactam copolymer (Nylon-6/12), a caprolactam /aminoundecanoic acid copolymer (Nylon-6/11), a caprolactam omega-aminononanoic acid copolymer (Nylon-6/9), a caprolactam /hexamethylene adipamide copolymer (Nylon-6/6,6), a caprolactam /hexamethylene adipamide / hexamethylene sebacamide copolymer (Nylon-6/6,6/6,10), etc.; and aromatic polyamides such as polymetaxylylene adipamide (MX-Nylon), a hexamethylene terephthalamide / hexamethylene isophthalamide copolymer (Nylon-6T/6I), etc. These polyamide resins can be used individually or can be used in combinations of two or more of them. Among them, polycaproamide (Nylon-6) and polyhexamethylene adipamide (Nylon-6,6) are preferable.

Examples of the polyacrylonitrile resin include a homopolymer of acrylonitrile and a copolymer of acrylonitrile and a monomer such as acrylic ester.

The composition of Embodiment 1 may contain at least one selected from additives such as an antioxidant, a plasticizer, a thermal stabilizer (a melt stabilizer), a photoinitiator, a deodorant, an ultraviolet absorber, an antistatic agent, a lubricant, a colorant, a filler, a filling material, a pigment, a dye, a processing aid, a flame retarder, an antifogging agent, and a desiccant.

The amounts of the carboxylate (A) and oxygen absorption promoter that are contained in the composition of Embodiment 1 are not particularly limited. They are adjusted according to the purpose and type of each component. In an example of the composition obtained when the carboxylate (A) is an unsaturated monocarboxylate while the oxygen absorption promoter is a transition metal salt, the amount of the carboxylate (A) is in the range of 1 to 30 parts by weight (for instance, 5 to 10 parts by weight) with respect to 100 parts by weight of the gas-barrier resin, while the amount of the oxygen absorption promoter is in the range of 10⁻⁴ to 100 parts by weight (for instance, 10⁻² to 0.1 part by weight) with respect to 100 parts by weight of the carboxylate (A), for example. Similarly in the case where the carboxylate (A) is a carboxylate other than the unsaturated monocarboxylate, the same ratios can be employed.

When a photocatalyst is used as the oxygen absorption promoter, the amount of the photocatalyst may be in the range of 0.1 to 100 parts by weight (for example, in the range of 0.5 to 10 parts by weight) with respect to 100 parts by weight of the carboxylate (A).

When a radical generator is used as the oxygen absorption promoter, the amount of the radical generator may be in the range of 0.1 to 100 parts by weight (for example, in the range of 0.5 to 10 parts by weight) with respect to 100 parts by weight of the carboxylate (A).

The composition of the present invention can be prepared by mixing components such as a gas-barrier resin, a carboxylate (A), an oxygen absorption promoter, and an additive. The method of mixing the respective components and the order of mixing them are not particularly limited. All the components may be mixed together at the same time, or the respective components may be mixed together in an arbitrary order. For example, the carboxylate (A) and the oxygen absorption promoter may be mixed together beforehand and then this may be mixed together with other components. The carboxylate (A) and the additive may be added together and then this may be mixed together with the oxygen absorption promoter and the resin. Furthermore, the oxygen absorption promoter and the resin may be mixed together, and then this may be mixed together with the carboxylate (A) and the additive. The carboxylate (A), resin, and additive may be mixed together and then this may be mixed together with the oxygen absorption promoter. The oxygen absorption promoter and additive may be mixed together and then this may be mixed together with the carboxylate (A) and resin. Moreover, a mixture obtained by mixing the carboxylate (A), resin, and additive may be mixed together with a mixture obtained by mixing the oxygen absorption promoter and resin.

Specific examples of the mixing method include a method in which a plurality of solutions are prepared by dissolving respective components in solvents and then these solutions are mixed together and thereafter the solvents are evaporated, and a method in which components other than resin are added to molten resin and then this is kneaded.

The kneading can be carried out by using, for example, a ribbon blender, a high-speed mixer, a Ko-kneader, a mixing roll, an extruder, or an intensive mixer.

The composition of the present invention can be shaped into various forms, for example, a film, a sheet, a container, etc. These formed articles can be used as packaging materials or deoxidants. Furthermore, they each can be used as a part of a packaging container. The composition of the present invention also can be used as a material that composes a layer of a part of a layered product. The composition of the present invention may be formed into pellets first and then the pellets may be shaped into various forms. Alternatively, the respective components of the composition may be dry-blended and then this may be shaped directly.

### Embodiment 2

In Embodiment 2, a packaging material of the present invention is described. The packaging material of the present invention includes a part made of the oxygen-absorbing composition described in Embodiment 1. This part may be in any form, for example, in the form of a layer, a bottle, or a cap. This packaging material can be formed by processing the composition of Embodiment 1 into various forms.

The composition of Embodiment 1 may be molded into a form of a film, a sheet, or a pipe by melt extrusion molding. It also may be molded into a form of a container by injection molding or may be molded into a hollow container such as a bottle by blow molding. For the blow molding, extrusion blow molding or injection blow molding can be used, for example.

The packaging material of Embodiment 2 may be formed of only a layer that is made of the composition according to Embodiment 1 (hereinafter may be referred to as a "layer (A)") or may be a layered product including the layer (A) and another layer made of another material (hereinafter may be referred to as a "layer (B)"). When the packaging material is a layered product, characteristics thereof further can be improved including mechanical properties, water vapor barrier properties, and oxygen barrier properties. The material and number of the layer (B) are selected according to the characteristics required for the packaging material.

The structure of the layered product is not particularly limited. An adhesive resin layer (hereinafter may be referred to as a "layer (C)") may be disposed between the layer (A) and the layer (B) in order to bond them together. Examples of the structure of the layered product include: layer (A) / layer (B), layer (B) / layer (A) / layer (B), layer (A) / layer (C) / layer (B), layer (B) / layer (C) / layer (A) / layer (C) / layer (B), layer (B) / layer (A) / layer (B) /layer (A) / layer (B), and layer (B) / layer (C) / layer (A) / layer (C) / layer (B) /layer (C) / layer (A) / layer (C) / layer (B). When the layered product includes a plurality of layers (B), they may be identical to each other or may be different from each other. The thickness of each layer of the layered product is not particularly limited. When the ratio of the thickness of the layer (A) to the thickness of the whole layered product is in the range of 2 to 20%, advantages in moldability and cost may be obtained in some cases.

The layer (B) can be formed of, for example, thermoplastic resin, metal, or paper. The metal to be used for the layer (B) can be, for example, steel, aluminum, etc. The paper to be used for the layer (B) can be a white board paper, a manila board paper, a milk carton paper, a cup paper, an ivory paper, etc. The thermoplastic resin to be used for the layer (B) is not particularly limited but can be, for example, one of the resins described as examples to be used for the layer (A). For example, polyolefins such as polyethylene, polypropylene, poly(4-methyl-1-pentene), and poly (1-butene) can be used. Furthermore, an ethylene-propylene copolymer, polyvinylidene chloride, polyvinyl chloride, polystyrene, polyacrylonitrile, polycarbonate, polyacrylate, or an ethylene-vinyl alcohol copolymer can be used. Polyesters such as polyethylene terephthalate, polybutylene terephthalate, polyethylene naphthalate, etc. may be used. Polyamides such as polycaproamide, polyhexamethylene adipamido, polymetaxylylene adipamido, etc. also can be used. Moreover, a copolymer of ethylene or propylene and another monomer can be used. Examples of another monomer include: alpha-olefins such as 1-butene, isobutene, 4-methyl-1-pentene, 1-hexene, 1-octene, etc.; unsaturated carboxylic acids such as itaconic acid, methacrylic acid, acrylic acid, maleic anhydride, etc. as well as their salts, their partial or complete esters, their nitriles, their amides, and their anhydrides; carboxylic acid vinyl esters such as vinyl formate, vinyl acetate, vinyl propionate, vinyl butylate, vinyl octanoate, vinyl dodecanoate, vinyl stearate, vinyl arachidonate, etc.; vinylsilane compounds such as vinyltrimethoxysilane, etc.; unsaturated sulfonic acids and their salts; alkylthiols; and vinyl pyrrolidones.

The layer (A) and the layer (B) each may be a non-stretched layer or may be a uniaxially or biaxially stretched or rolled layer.

The adhesive resin to be used for the layer (C) is not particularly limited, as long as it can bond the layers to each other. For example, a polyurethane or polyester one- or two-component curing adhesive, or a carboxylic acid-modified polyolefin resin can be used. The carboxylic acid-modified polyolefin resin is obtained through copolymerization or graft modification of unsaturated carboxylic acid or anhydride thereof (for example, maleic anhydride) with an olefin polymer. When the layer (A) and the layer (B) contain polyolefin resin, the use of the carboxylic acid-modified polyolefin resin allows a higher adhesiveness to be obtained. Examples of the carboxylic acid-modified polyolefin resin include a resin obtained through carboxylic acid modification of a polymer such as polyethylene, polypropylene, a polypropylene copolymer, an ethylene-vinyl acetate copolymer, or an ethylene-(meth)acrylic ester copolymer.

A deodorant may be mixed in at least one of the layers that compose the layered product. For the deodorant, one described as an example in Embodiment 1 can be used, for example.

The method of producing the layered product of Embodiment 2 is not particularly limited. It can be formed by a well-known method, for example. For instance, processes such as extrusion lamination, dry lamination, solvent casting, co-injection molding, or co-extrusion molding can be used. Examples of the co-extrusion molding that can be employed include co-extrusion lamination, co-extrusion sheet molding, co-extrusion inflation molding, and co-extrusion blow molding.

In the case where the packaging material of the present invention is a container having a multilayered structure, oxygen contained in the container can be absorbed quickly when the layer made of the composition according to Embodiment 1 is disposed as a layer close to the inner surface of the container, for example, as the innermost layer.

The present invention can be used suitably for multilayered containers, especially those having layers whose total thickness is 300 µm or less or those produced by extrusion blow molding.

A multilayered container having layers whose total thickness is 300 µm or less is a container formed of a relatively thin multilayered structure such as a multilayered film and generally is used in the form of a pouch, for example. It is flexible and easy to produce, has an excellent gas barrier property, and further has a continuous oxygen-absorbing function. Accordingly, it is highly useful for packaging of products that are highly sensitive to oxygen and thereby susceptible to degradation. When the total thickness of the layers is 300 µm or less, high flexibility is obtained. When the total thickness is 250 µm or less, particularly 200 µm or less, higher flexibility is obtained. In view of the mechanical strength, the total thickness is preferably at least 10 µm, more preferably at least 20 µm.

In order to seal such a multilayered container, it is preferable that at least one of the surface layers of the multilayered film be a layer made of a heat sealable resin. Examples of such a resin include polyolefins such as polyethylene and polypropylene. A multilayered film processed into a pouch is filled with contents and then is heat-sealed. Thus a multilayered container is obtained.

On the other hand, a multilayered container that is produced by the extrusion blow molding is used generally in the form of a bottle, for example. It has a high productivity, an excellent gas barrier property, and further a continuous oxygen-absorbing function. It therefore is highly useful for packaging of products that are highly sensitive to oxygen and thereby susceptible to degradation.

The thickness of the body of a bottle-shaped container is generally in the range of 100 to 2000 µm and is selected according to the intended use thereof. In this case, the thickness of the layer made of the composition according to Embodiment 1 can be in the range of 2 to 200 µm, for example.

The packaging material of the present invention can be a packing (gasket) for a container, particularly a gasket for the cap of a container. In this case, the gasket is formed of the composition according to Embodiment 1.

### EXAMPLES

Hereinafter, the present invention is described further in detail using examples. First, unsaturated carboxylates were prepared by the following method.

### <Calcium Linolenate>

First, 24.00 g of linolenic acid, 3.19 g of calcium hydroxide, and 100 ml of toluene were mixed together. This was subjected to azeotropic dehydration for four hours and then the toluene was distilled away. The product thus obtained was allowed to stand to cool. Thereafter it was dried under reduced pressure. Thus calcium linolenate was obtained.

### <Sodium Linolenate>

First, 24.00 g of linolenic acid, 3.45 g of sodium hydroxide, and 100 ml of toluene were mixed together. This was subjected to azeotropic dehydration for four hours and then the toluene was distilled away. The product thus obtained was allowed to stand to cool. Thereafter it was dried under reduced pressure. Thus sodium linolenate was obtained.

### <Aluminum Linolenate>

First, 24.00 g of linolenic acid, 3.45 g of sodium hydroxide, and 100 ml of toluene were mixed together. This was subjected to azeotropic dehydration for four hours and then the toluene was distilled away. The product thus obtained was allowed to stand to cool. Thereafter it was dried under reduced pressure. Thus sodium linolenate was obtained. An aqueous solution containing 2.44 g of aluminum sulfate (14 to 18 hydrate) dissolved in 20 ml of water was added to an aqueous solution containing 12.86 g of dried sodium linolenate dissolved in 230 ml of water, over 30 minutes. The product that had precipitated was taken out and then was subjected to vacuum drying at 60°C. Thus, 12.00 g of aluminum linolenate (light yellow) was obtained.

### <Calcium Eicosapentaenoate>

First, 28.3 g of eicosapentaenoic acid ethyl ester (manufactured by KYOWA TECNOS CO., LTD.), 3.19 g of calcium hydroxide, and 100 ml of toluene were mixed together. This was subjected to azeotroped for three hours and then the toluene was distilled away. The product thus obtained was allowed to stand to cool. Thereafter it was dried under reduced pressure. Thus calcium eicosapentaenoate (EPA-Ca) was obtained.

### <Sodium Eicosapentaenoate>

First, 1.26 g (31.5 mmol) of sodium hydroxide was dissolved in 45.0 g of ethanol. Thereafter, 10.00 g (30.3 mmol) of eicosapentaenoic acid ethyl ester (manufactured by KYOWA TECNOS CO., LTD.) was added thereto. This was refluxed for four hours. The reaction liquid was concentrated with an evaporator and then was dried under reduced pressure. Thus sodium eicosapentaenoate (EPA-Na) was obtained.

### <Barium Eicosapentaenoate>

First, 1.26 g (31.5 mmol) of sodium hydroxide was dissolved in 45.0 g of ethanol. Thereafter, 10.00 g (30.3 mmol) of eicosapentaenoic acid ethyl ester (manufactured by KYOWA TECNOS CO., LTD.) was added thereto. This was refluxed for four hours. The reaction liquid was concentrated with the evaporator and then was dried under reduced pressure. Thus sodium eicosapentaenoate was obtained. Then an aqueous solution containing 3.2 g of barium chloride dissolved in 30 ml of water was added to an aqueous solution containing 10.00 g of the dried sodium eicosapentaenoate dissolved in 200 ml of water, over 30 minutes. The product that had precipitated was taken out and then was subjected to vacuum drying at 60°C. Thus, 9.5 g of barium eicosapentaenoate (EPA-Ba) was obtained.

### <Sodium Docosahexaenoate>

Sodium docosahexaenoate (DHA-Na) was obtained by the same method as described above except that docosahexaenoic acid ethyl ester (manufactured by KYOWA TECNOS CO., LTD.) was used instead of the eicosapentaenoic acid ethyl ester.

### <Eleostearic Acid>

First, 500 g of tung oil was added into a 3-liter separable flask equipped with a cooling pipe, a dripping funnel, and a nitrogen gas feeding line and then nitrogen gas substitution was carried out. The temperature thereof was raised to 100°C and then 723 g of 20% potassium hydroxide solution was dripped thereinto. After completion of dripping, it was stirred at 100°C for four hours. The reaction liquid was cooled and then 1 kg of toluene was added thereto to dissolve it. Thereafter, 260 g of hydrochloric acid and 260 g of pure water were added thereto and thus a homogeneous solution was obtained. After the solution was concentrated to 496.7 g, the precipitated solid was transferred into a separable flask. Then hexane was added thereto. This was stirred at 70°C for three hours and thus a homogeneous solution was obtained. The solution thus obtained was cooled to 0°C. Thereafter, it was allowed to stand overnight and thereby a solid was precipitated. The solid thus precipitated was subjected to suction filtration. Then this was washed twice with 1 liter of cold hexane. Thereafter, it was vacuum dried at room temperature. Thus, 233g of eleostearic acid was obtained.

### <Sodium Eleostearate>

First, 116.5 g of eleostearic acid prepared by the above-mentioned method and 16.73 g of sodium hydroxide were placed into a 3-liter separable flask equipped with a cooling pipe, a dripping funnel, and a nitrogen feeding line, and then nitrogen gas substitution was carried out. Thereafter, 155 g of pure water was added thereto and this was stirred at 95°C for three hours. The solid thus produced was subjected to suction filtration. Then this was washed three times with 2 liters of pure water. Thereafter, it was vacuum dried at 80°C. Thus, 107g of sodium eleostearate was obtained.

### <Iron Linolenate>

First, 25.13 g of linolenic acid, 3.61 g of sodium hydroxide (dissolved in 10 g of water), and 100 ml of toluene were together. This was subjected to azeotropic dehydration for two hours and then the toluene was distilled away. The product thus obtained was dried under reduced pressure. Thus 21.55 g of sodium linolenate was obtained. Then 10.00 g of this sodium linolenate and 90 g of water were mixed together in a nitrogen atmosphere. The temperature thereof was raised in a bath whose temperature was 50°C. Thereafter, an aqueous solution was added to the mixture over 30 minutes. The aqueous solution contained 4.63 g of ferrous sulfate (heptahydrate) dissolved in 18 ml of water (that had been nitrogen-bubbled). When the aqueous solution was added, the precipitation was blackened with the passage of time. The precipitation was blackened completely 30 minutes after addition of the ferrous sulfate aqueous solution. Conceivably, this was because iron (II) was oxidized into iron (III). As described above, in the comparative sample in which a transition metal salt of linolenic acid was used, there were problems of poor handling property and coloring due to intense oxidation degradation.

### <Manganese Linolenate>

Manganese linolenate was obtained by the same method as described above except that manganese sulfate (pentahydrate) was used instead of ferrous sulfate (heptahydrate).

### <Production of Samples 1 to 3>

After 7 g of each of the various types of linolenic acid metal salts that had been synthesized by the above-mentioned methods, 0.59 g of cobalt stearate (the amount of Co was about 800 ppm), and 63 g of EVOH were dry-blended, they were melt-blended at 200°C for five minutes. The melt blend was carried out while the atmosphere was purged with nitrogen gas. Subsequently, each composition thus obtained was heated to 200°C and then was pressed. Thus films whose thickness was about 200 µm were obtained. In this manner, a film containing calcium linolenate (Sample 1), a film containing sodium linolenate (Sample 2), and a film containing aluminum linolenate (Sample 3) were produced. The sections of these films were observed with a transmission electron microscope. As a result, each of the various types of linolenic acid metal salts had been dispersed, with the particle diameters thereof being about 1 µm, and thereby had a good dispersibility. Particularly, aluminum linolenate had been dispersed, with the particle diameters thereof being minuter, and thereby had a very good dispersibility.

### <Production of Samples 4 to 6>

A film containing calcium eicosapentaenoate (Sample 4), a film containing sodium eicosapentaenoate (Sample 5), and a film containing barium eicosapentaenoate (Sample 6) were produced by the same method as in the case of Samples 1 to 3 except that 7 g of each of the various types of eicosapentanoic acid metal salts was used instead of 7 g of linolenic acid salt. The sections of these films (whose thickness was about 200 µm) were observed with the transmission electron microscope. As a result, each eicosapentanoic acid metal salt had been dispersed, with the particle diameters thereof being about 1 µm, and thereby had a good dispersibility.

### <Production of Sample 7>

A film (Sample 7, thickness : about 200 µm) was produced by the same method as in the case of Samples 1 to 3 except that 7 g of sodium docosahexaenoate was used instead of 7 g of linolenic acid salt. The section of this film was observed with the transmission electron microscope. As a result, sodium docosahexaenoate had been dispersed, with the particle diameters thereof being about 1 µm, and thereby had a good dispersibility.

### <Production of Sample 8>

A film (Sample 8, thickness : about 200 µm) was produced by the same method as in the case of Samples 1 to 3 except that 7 g of sodium eleostearate was used instead of 7 g of linolenic acid salt. The section of this film was observed with the transmission electron microscope. As a result, sodium eleostearate had been dispersed, with the particle diameters thereof being about 1 µm, and thereby had a good dispersibility.

### <Production of Sample 9>

A film (Sample 9, thickness : about 200 µm) was produced by the same method as in the case of Sample 5 except that 63 g of polycaproamide (Nylon-6, manufactured by UBE INDUSTRIES, LTD.; Trade Name: 1030B) was used instead of 63g of EVOH. The section of this film was observed with the transmission electron microscope. As a result, an eicosapentanoic acid metal salt had been dispersed, with the particle diameters thereof being about 1 µm, and thereby had a good dispersibility.

### < Production of Sample 10>

A film (with a thickness of about 200 µm) of Sample 10 was produced by the same method as in the case of Sample 5 except that 63 g of polyacrylonitrile (manufactured by Mitsui Chemicals, Inc.; Trade Name: Barex 1000) was used instead of 63g of EVOH.

### <Production of Sample 11>

A film (Sample 11, thickness : about 200 µm) was produced by the same method as in the case of Sample 5 except that 63 g of polyvinyl chloride (manufactured by Sekisui Chemical Co., Ltd.; Trade Name: Esmedica V6142E) was used instead of 63 g of EVOH.

### <Production of Sample 12>

A film (Sample 12) was produced by the same method as in the case of Sample 5 except that titanium dioxide powder (manufactured by NIPPON AEROSIL CO., LTD.; Trade Name: P-25 (containing 73.5% of anatase type and 26.5% of rutile type) was used instead of cobalt stearate. Specifically, first, 7 g of sodium eicosapentaenoate, 0.70 g of titanium dioxide, and 63 g of EVOH were dry-blended and then were melt-blended at 200°C for five minutes. The melt blend was carried out while the atmosphere was purged with nitrogen gas. Subsequently, the composition thus obtained was heated to 200°C and then was pressed. Thus a film (Sample 12) whose thickness was about 200 µm was obtained. The section of this film was observed with the transmission electron microscope. As a result, sodium eicosapentaenoate had been dispersed, with the particle diameters thereof being about 1 µm, and thereby had a good dispersibility.

### <Production of Sample 13>

First, 40.5 g of mixed solution of water / methanol (= 30/70 wt%) and 4.5 g of EVOH were placed into a beaker. This was heated to 80°C while being stirred well. Thus a solution of EVOH whose concentration was 10 wt% was prepared. Then 0.5 g of sodium eicosapentaenoate and 0.05 g of N-hydroxyphthalimide (NHPI) were added to the solution and were dissolved homogeneously in a nitrogen gas atmosphere at room temperature. The solution thus obtained was applied, by bar coating, to a commercial PET film that had been subjected to a corona treatment. Thereafter, the solvent was removed with the vacuum dryer. Thus, a film (Sample 13) in which a coating film with a thickness of about 10 µm had been formed was obtained. The section of the coating film part of this film was observed with the transmission electron microscope. As a result, sodium eicosapentaenoate had been dispersed, with the particle diameters thereof being about 1 µm, and thereby had a good dispersibility.

### <Production of Sample 14>

A film (Sample 14) was produced by the same method as in the case of Sample 13 except that cobalt acetate was used instead of N-hydroxyphthalimide. Specifically, 40.5 g of mixed solution of water /methanol (= 30/70 wt%) and 4.5 g of EVOH were placed into a beaker. This was heated to 80°C while being stirred well. Thus a solution of EVOH whose concentration was 10 wt% was prepared. Then 0.5 g of sodium eicosapentaenoate and 0.85 g of cobalt acetate (the amount of Co was about 400 ppm) were added to the solution and were dissolved homogeneously in a nitrogen gas atmosphere at room temperature. The solution thus obtained was applied, by bar coating, to a commercial PET film that had been subjected to a corona treatment. Thereafter, the solvent was removed with the vacuum dryer. Thus, a film (Sample 14) in which a coating film with a thickness of about 10 µm had been formed was obtained. The section of the coating film part of this film was observed with the transmission electron microscope. As a result, sodium eicosapentaenoate had been dispersed, with the particle diameters thereof being about 1 µm, and thereby had a good dispersibility.

### <Comparative Sample 1>

A film (Comparative Sample 1, thickness : about 200 µm) was produced by the same method as in the case of Samples 1 to 3 except that 7 g of linolenic acid was used instead of 7 g of linolenic acid salt. The section of this film was observed with the transmission electron microscope. As a result, linolenic acid had been dispersed, with the particle diameters thereof being at least 5 µm. Thus the dispersibility thereof was not good.

### <Comparative Sample 2>

A film (Comparative Sample 2, thickness : about 200 µm) was produced by the same method as in the case of Samples 1 to 3 except that 7 g of eleostearic acid was used instead of 7 g of linolenic acid salt. The section of this film was observed with the transmission electron microscope. As a result, eleostearic acid had been dispersed, with the particle diameters thereof being at least 5 µm. Thus the dispersibility thereof was not good.

### <Comparative Sample 3>

A film (Comparative Sample 2, thickness : about 200 µm) was produced by the same method as in the case of Samples 1 to 3 except that 63 g of low-density polyethylene (manufactured by Japan Polyethylene Corporation; Trade Name: Novatec LA320) was used instead of 63 g of EVOH. The section of this film was observed with the transmission electron microscope. As a result, a linolenic acid salt had been dispersed, with the particle diameters thereof being at least 5 µm. Thus the dispersibility thereof was not good.

### <Comparative Samples 4 and 5>

Films of Comparative Samples 4 and 5 were produced by the same method as in the case of Samples 1 to 3 except that iron linolenate or manganese linolenate was used instead of sodium linolenate. However, both the samples were colored intensely. It was not possible to produce clear films.

### [Evaluation of Oxygen-Absorbing Ability]

### <Evaluation of Oxygen-Absorbing Ability of Samples 1 to 3 and Comparative Sample 1>

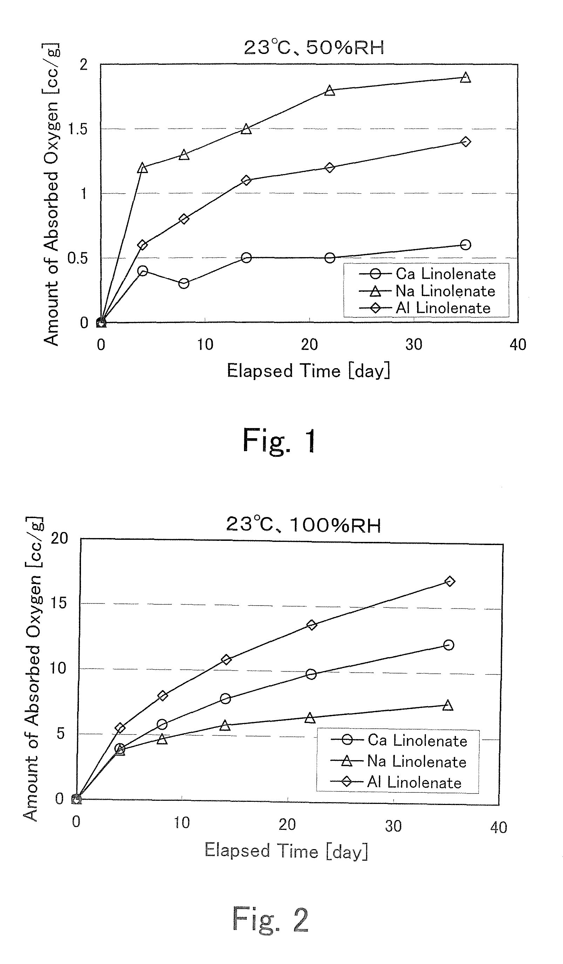

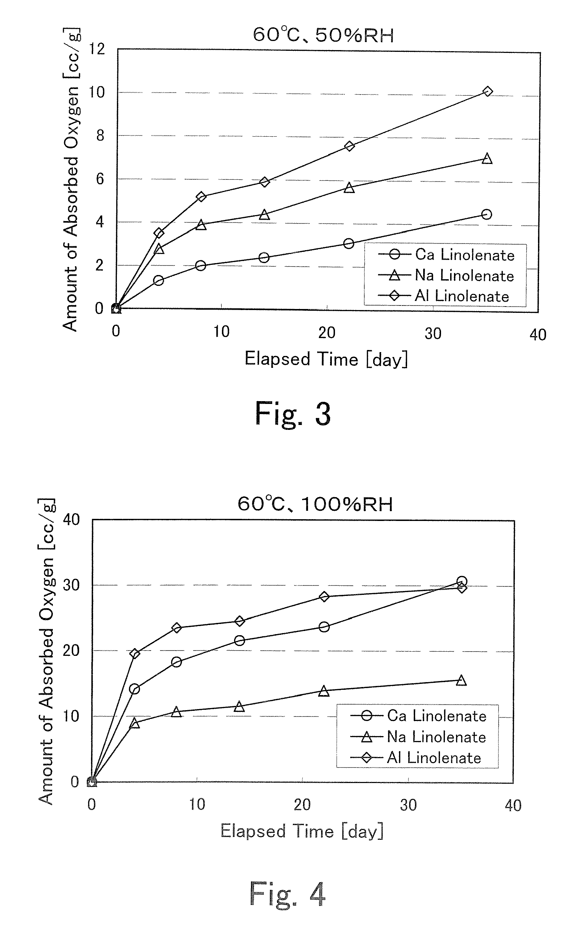

First, 1.0 g of each film of Samples 1 to 3 and Comparative Sample 1 was placed into a bottle with a volume of 260 cc in (1) a room with a temperature of 23°C and a relative humidity of 50% or (2) a room with a temperature of 23°C and a relative humidity of 100%, and then the bottle was sealed. In addition, 1.0 g of each of the above-mentioned films was placed into a bottle with a volume of 260 cc together with 5 cc of water in (3) a room with a temperature of 60°C and a relative humidity of 50% or (4) a room with a temperature of 60°C and a relative humidity of 100%, and then the bottle was sealed. Then the oxygen concentration in each bottle was measured periodically and the amount of absorbed oxygen was calculated. In this case, the bottles placed under the conditions (1) and (2) were stored at 23°C, while those placed under the conditions (3) and (4) were stored at 60°C. The measurement results are indicated in FIGs. 1 to 4. As shown in FIGs. 1 to 4, Sample 2 in which sodium linolenate was used had a lower oxygen-absorbing ability under high humidity. Sample 1 in which calcium linolenate was used was affected considerably by temperature and humidity at the time of measurement. However, in Sample 1, the oxygen absorption was achieved up to 31 cc/g (at 60°C and 100%RH; after 38 days). Like Sample 1, Sample 3 in which aluminum linolenate was used was affected considerably by temperature and humidity at the time of measurement. However, in Sample 3, the oxygen absorption was achieved up to 30 cc/g (at 60°C and 100%RH; after 38 days). On the other hand, the film of Comparative Sample 1 hardly absorbed oxygen.

### <Evaluation of Oxygen-Absorbing Ability of Samples 4 to 8 and Comparative Sample 2>

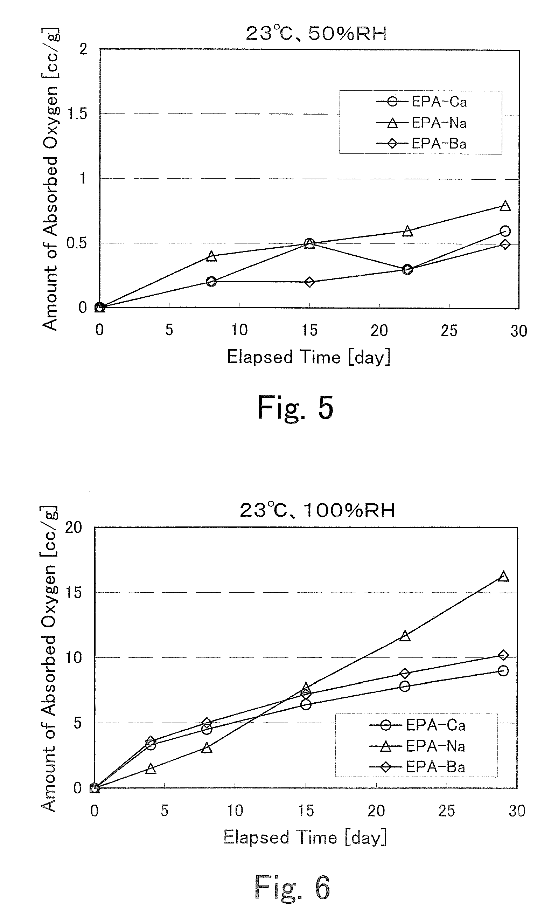

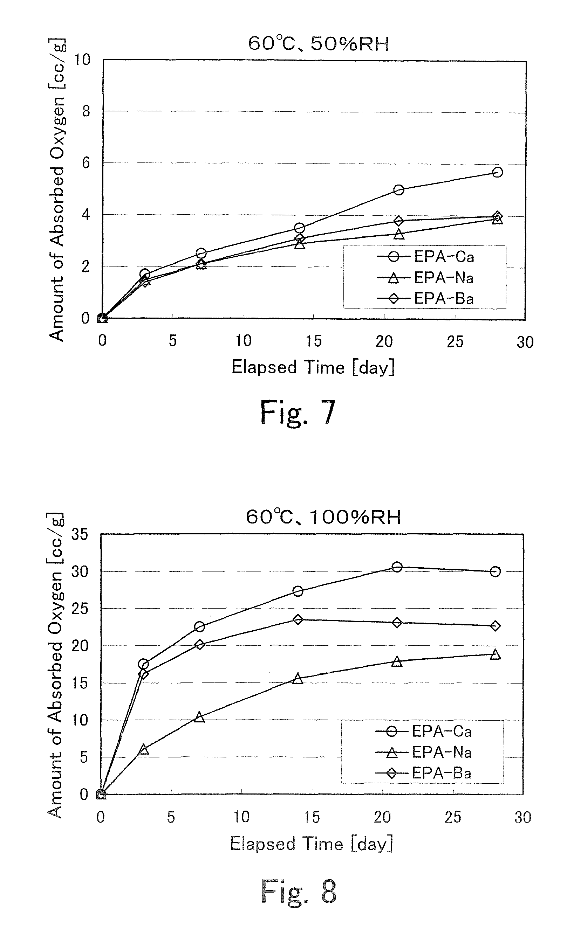

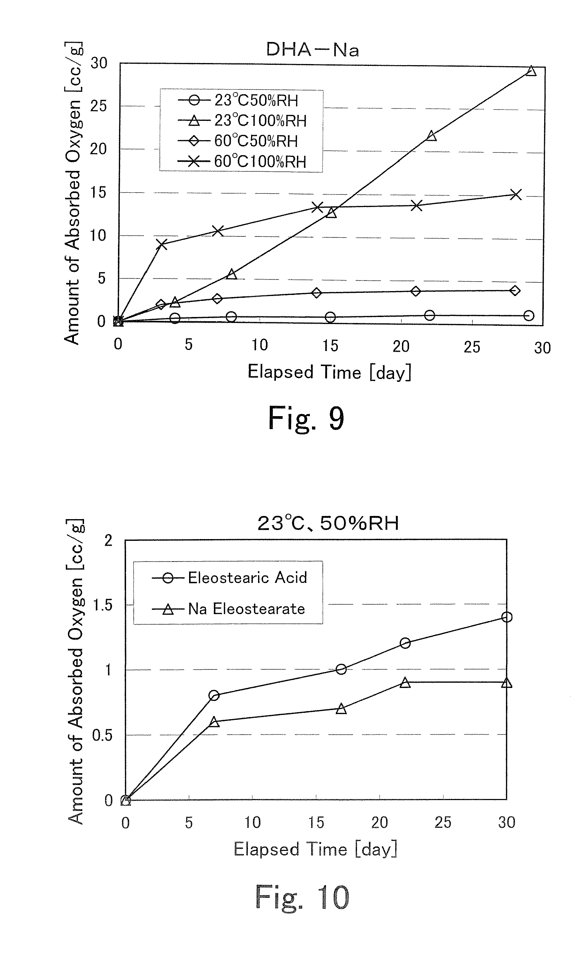

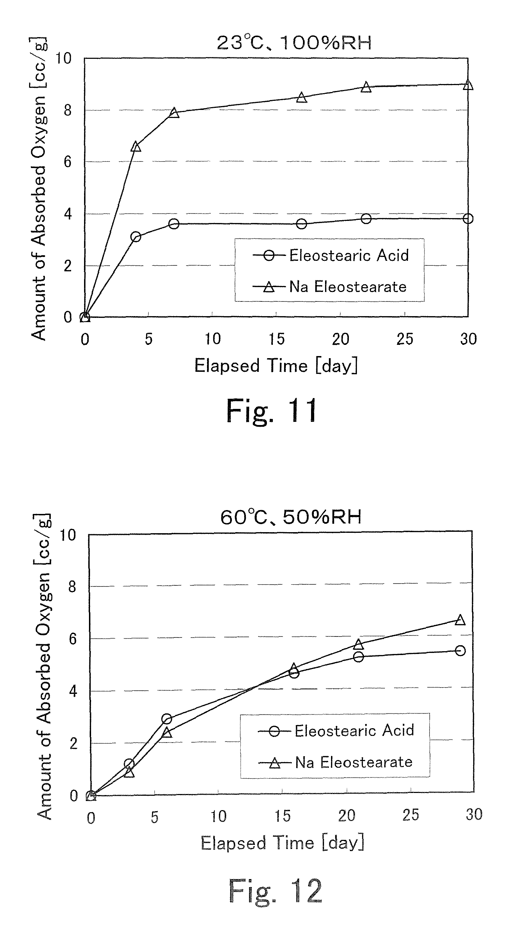

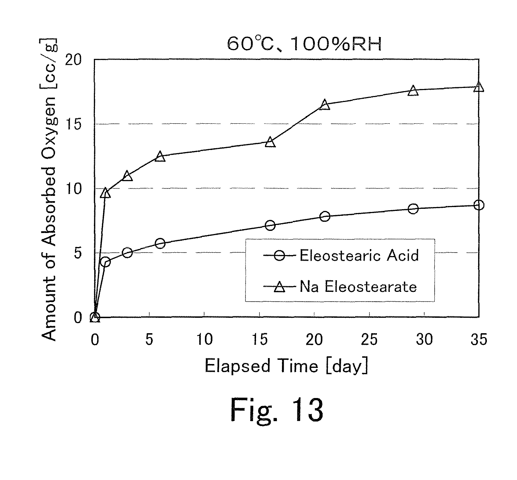

The oxygen-absorbing ability of the films of Samples 4 to 8 and Comparative Sample 2 was evaluated by the same manner as described above. The measurement results of Samples 4 to 6 are shown in FIGs. 5 to 8. The measurement result of Sample 7 is shown in FIG. 9. The measurement results of Sample 8 and Comparative Sample 2 are shown in FIGs. 10 to 13.

### <Evaluation of Oxygen-Absorbing Ability of Samples 9 to 14 and Comparative Sample 3>

The oxygen-absorbing ability of the films of Samples 9 to 14 and Comparative Sample 3 was evaluated by the same manner as described above. As a result, all the samples exhibited oxygen absorption.

### <Evaluation of Oxygen-Absorbing Ability of Comparative Sample 3>

The oxygen-absorbing ability of the film of Comparative Sample 3 was evaluated by the same manner as described above. As a result, the film of Comparative Sample 3 exhibited oxygen absorption.

### <Evaluation of Oxygen-Absorbing Ability of Comparative Samples 4 and 5>

The oxygen-absorbing ability of the films of Comparative Samples 4 and 5 was evaluated by the same manner as described above. As a result, since both the samples had poor thermal stability, they were colored intensely and therefore they exhibited little oxygen absorption.

### <Odor Evaluation>

First, 1 g of each film of Samples 1 to 8 and Comparative Samples 1 to 3 was weighed precisely. This was rolled into a roll five hours after sheet formation. Then this was placed in a bottle that had been filled with air having a temperature of 23°C and a relative humidity of 50% and that had an inner capacity of 85 ml. Subsequently, 1 ml of water was added into this bottle and then the opening of the bottle was sealed using a multilayered sheet containing an aluminum layer and epoxy resin. This was allowed to stand at 60°C for two weeks. Thereafter, five panelists evaluated headspace gas of each sample. As a result, Comparative Samples 1 and 3 each had a fishy odor, while Comparative Sample 2 had a rubbery odor. On the other hand, Samples 1 to 8 had less odor than the comparative samples.

### <Evaluation of Volatilization Inhibition Effect>

Like Samples 1 to 8 and Comparative Sample 1, each metal salt or linolenic acid, and cobalt stearate and EVOH were dry-blended and then were melt-blended at 200°C for five minutes. In order to remove impurities, the melt blend was carried out while the inside of the blend equipment was deaerated through a vent using a vacuum pump to reduce the pressure therein so as to have a pressure of 266 Pa (2 mmHg). A film was produced using the composition thus prepared and then the oxygen-absorbing ability thereof was measured. As a result, Comparative Sample 1 produced using linolenic acid did not exhibit a sufficiently high oxygen-absorbing ability since the linolenic acid volatilizes through the vent during the melt blend. On the other hand, the metal salt does not volatilize like the linolenic acid. Accordingly, each sample produced using the metal salt exhibited an oxygen-absorbing ability equivalent to that of the samples produced by melt blend that was carried out while the atmosphere was purged with nitrogen gas.

### <Elution Test>

A 20-µm thick stretched polypropylene film (manufactured by TOHCELLO CO., LTD., OP-#20 U-1) was stacked on each surface of the films of Samples 1 to 8 and Comparative Samples 1 and 2, using an adhesive. The adhesive used herein was a mixture of a urethane adhesive (manufactured by TOYO MORTON, LTD.; Trade Name: AD355A), a curing agent (manufactured by TOYO MORTON, LTD.; Trade Name: Cat-10), and a mixed solution of toluene and methyl ethyl ketone (with a weight ratio of 1 = 1). Thus a layered sheet was produced that had a layered structure of an stretched polypropylene film layer / a urethane adhesive layer / a layer of the above-mentioned resin composition (an oxygen-absorbing film layer) / a urethane adhesive layer / an stretched polypropylene film layer.

Subsequently, two layered sheets thus obtained were stacked together and were heat-sealed. Thus a pouch with a size of 30 cm × 30 cm was produced. Then water was placed in the pouch. This pouch was stored in an atmosphere having a temperature of 30°C and a relative humidity of 80% for 60 days. Thereafter, the water contained in the pouch was analyzed by gas chromatography-mass spectrometry (GC-MS). As a result, in the case of Comparative Sample 1 produced using linolenic acid, elution of linolenic acid was observed, while elution of eleostearic acid was observed in the case of Comparative Sample 2 produced using eleostearic acid. On the other hand, in the samples produced using the respective metal salts, such elusion was not observed.

The compositions of the respective samples are indicated in Table 1.

**[Table 1]**

| | Unsaturated Carboxylic Acid | Oxygen Absorption Promoter | Resin |
|---|---|---|---|
| Sample 1 | Ca Linolenate | Co Stearate | EVOH |
| Sample 2 | Na Linolenate | Co Stearate | EVOH |
| Sample 3 | Al Linolenate | Co Stearate | EVOH |
| Sample 4 | EPA-Ca | Co Stearate | EVOH |
| Sample 5 | EPA-Na | Co Stearate | EVOH |
| Sample 6 | EPA-Ba | Co Stearate | EVOH |
| Sample 7 | DHA-Na | Co Stearate | EVOH |
| Sample 8 | Na Eleostearate | Co Stearate | EVOH |
| Sample 9 | EPA-Na | Co Stearate | Nylon-6 |
| Sample 10 | EPA-Na | Co Stearate | Polyacrylonitrile |
| Sample 11 | EPA-Na | Co Stearate | Polyvinyl Chloride |
| Sample 12 | EPA-Na | Titanium Dioxide | EVOH |
| Sample 13 | EPA-Na | NHPI | EVOH |
| Sample 14 | EPA-Na | Co Acetate | EVOH |
| Comparative Sample 1 | Linolenic Acid | Co Stearate | EVOH |
| Comparative Sample 2 | Eleostearic Acid | Co Stearate | EVOH |
| Comparative Sample 3 | Na Linolenate | Co Stearate | Polyethylene |
| Comparative Sample 4 | Fe Linolenate | Co Stearate | EVOH |
| Comparative Sample 5 | Mn Linolenate | Co Stearate | EVOH |

Evaluation results of the respective samples are indicated in Table 2.

**[Table 2]**

| | Oxygen Absorbing Ability | Odor | Volatilization Inhibition Effect | Elution Test | Dispersibility |
|---|---|---|---|---|---|
| Sample 1 | Yes | Low | Not Volatilized | Not Eluted | About 1µm |
| Sample 2 | Yes | Low | Not Volatilized | Not Eluted | About 1µm |
| Sample 3 | Yes | Low | Not Volatilized | Not Eluted | About 1µm |
| Sample 4 | Yes | Low | Not Volatilized | Not Eluted | About 1µm |
| Sample 5 | Yes | Low | Not Volatilized | Not Eluted | About 1µm |
| Sample 6 | Yes | Low | Not Volatilized | Not Eluted | About 1µm |
| Sample 7 | Yes | Low | Not Volatilized | Not Eluted | About 1 µm |
| Sample 8 | Yes | Low | Not Volatilized | Not Eluted | About 1 µm |
| Sample 9 | Yes | - | - | - | About 1 µm |
| Sample 10 | Yes | - | - | - | - |
| Sample 11 | Yes | - | - | - | - |
| Sample 12 | Yes | - | - | - | About 1 µm |
| Sample 13 | Yes | - | - | - | About 1 µm |
| Sample 14 | Yes | - | - | - | About 1 µm |
| Comparative Sample 1 | Almost None | Fishy Odor | Volatilized | Eluted | At least 5 µm |
| Comparative Sample 2 | Yes | Rubbery Odor | - | Eluted | At least 5 µm |
| Comparative Sample 3 | Yes | Fishy Odor | -- | - | At least 5 µm |
| Comparative Sample 4 | Almost None | - | - | - | - |
| Comparative Sample 5 | Almost None | - | - | - | - |

The dispersibility was evaluated based on the particle diameter of carboxylic acid or a carboxylate that had been dispersed in the resin. The smaller the particle diameter, the better the dispersibility. As indicated in the result of Comparative Sample 3, when polyethylene that was not a gas-barrier resin was used as the resin, the dispersibility of the oxygen absorption promoter deteriorated. Conceivably, this is because a hydrocarbon polymer such as polyethylene has a weaker affinity for a carboxylate having an oxygen-containing functional group than that of the gas-barrier resin.

As shown in Table 2, a fishy odor or rubbery odor was generated in Comparative Samples 1 and 2 produced using unsaturated carboxylic acid. In addition, Comparative Samples 1 and 2 had a lower dispersibility of unsaturated carboxylic acid. Similarly, in Comparative Sample 3 produced using polyethylene as the resin, a fishy odor was generated. Comparative Samples 4 and 5 produced using a transition metal salt as the unsaturated carboxylate each were colored intensely and had a lower oxygen-absorbing ability.

### Industrial Applicability

The present invention is applicable for oxygen-absorbing compositions and packaging materials produced using the same. Particularly, the present invention can be used suitably for packaging materials for goods that are affected considerably by deterioration caused by oxygen, for instance, foodstuffs, medicines, medical equipment, machine parts, garments, etc.

## Claims

1. An oxygen-absorbing composition comprising a gas-barrier resin as well as a salt of an unsaturated carboxylic acid and an oxygen absorption promoter that are dispersed in the gas-barrier resin,
wherein a cation that composes the salt of the unsaturated carboxylic acid is a cation of at least one element selected from the group consisting of an alkali metal, an alkaline earth metal, and aluminum,
the oxygen absorption promoter is at least one selected from the group consisting of a transition metal salt, a radical generator, and a photocatalyst particle, and
the unsaturated carboxylic acid has a molecular weight of 3000 or less.

2. The oxygen-absorbing composition according to claim 1, wherein the unsaturated carboxylic acid is at least one selected from the group consisting of palmitoleic acid, oleic acid, linoleic acid, linolenic acid, arachidonic acid, parinaric acid, dimer acid, docosahexaenoic acid, eicosapentaenoic acid, fish oil fatty acid, linseed oil fatty acid, soybean oil fatty acid, tung oil fatty acid, sugar oil fatty acid, sesame oil fatty acid, cottonseed oil fatty acid, rapeseed oil fatty acid, and tall oil fatty acid.

3. The oxygen-absorbing composition according to claim 1, wherein the gas-barrier resin comprises a polyvinyl alcohol resin.

4. A packaging material comprising a part made of an oxygen-absorbing composition,
wherein the oxygen-absorbing composition comprises a gas-barrier resin as well as a salt of an unsaturated carboxylic acid and an oxygen absorption promoter that are dispersed in the gas-barrier resin,
a cation that composes the salt of the unsaturated carboxylic acid is a cation of at least one element selected from the group consisting of an alkali metal, an alkaline earth metal, and aluminum,
the oxygen absorption promoter is at least one selected from the group consisting of a transition metal salt, a radical generator, and a photocatalyst particle, and
the unsaturated carboxylic acid has a molecular weight of 3000 or less.

5. The packaging material according to claim 4, wherein the unsaturated carboxylic acid is at least one selected from the group consisting of palmitoleic acid, oleic acid, linoleic acid, linolenic acid, arachidonic acid, parinaric acid, dimer acid, docosahexaenoic acid, eicosapentaenoic acid, fish oil fatty acid, linseed oil fatty acid, soybean oil fatty acid, tung oil fatty acid, sugar oil fatty acid, sesame oil fatty acid, cottonseed oil fatty acid, rapeseed oil fatty acid, and tall oil fatty acid.

6. The packaging material according to claim 4, wherein the gas-barrier resin comprises a polyvinyl alcohol resin.

7. The packaging material according to claim 4, wherein the part is a layer made of the oxygen-absorbing composition.

8. The packaging material according to claim 7, comprising the layer and another layer stacked on the layer.
